# EUROPEAN PATENT SPECIFICATION

(11) **EP 3 892 166 B1**
(45) Date of publication and mention of the grant of the patent: **03.06.2026**
(21) Application number: 21166708.4
(22) Date of filing: 01.04.2021
(51) Int. Cl.: A47H 1/122, A47H 1/124, E06B 9/323, E06B 9/42

(54) **PUNCHING-FREE ELECTRIC MOUNTING UNIT AND CURTAIN ROD WITH THE SAME**
STANZFREIE ELEKTRISCHE MONTAGEEINHEIT UND VORHANGSTANGE DAMIT
UNITÉ DE MONTAGE ÉLECTRIQUE SANS POINÇONNAGE ET TRINGLE À RIDEAUX ÉQUIPÉE DE CETTE UNITÉ

(30) Priority: 09.04.2020 CN 202010273616
(43) Date of publication of application: 13.10.2021
(73) Proprietor: Ningbo Sunfree Motor Technology Company Limited, Ningbo City, Zhejiang 315145 (CN)
(72) Inventor: ZHOU, Yongqiang, Ningbo City, Zhejiang Province 315145 (CN)
(74) Representative: Cabinet Chaillot

(56) References cited:
- CN-A- 106 859 258
- US-A1- 2018 252 029

## Description

### Technical Field

The present invention relates to a curtain rod mounting component, in particular to a punching-free electric mounting unit and a curtain rod with the mounting unit.

### Background

A hanging curtain used for sun shading, decoration and the like usually comprises a curtain fabric and a rod. Hanging curtains such as window curtains, door curtains, shower curtains and the like generally adopt customized production. To be specific, the dimensions of the location where a hanging curtain is planned to be installed are measured, and then the hanging curtain is produced in a customized manner according to the measured specific dimensions including the length of a customized rod, the width of a curtain fabric and so on. In this process, it is easy to cause inaccuracy of measured dimensions due to various reasons, particularly, the length of the rod does not fit with the width of a to-be-installed location so that the hanging curtain is unsuccessfully installed, or the hanging curtain is scrapped because of overlarge gaps, greatly wasting social resources. In view of the above problem, there provides a technical solution of adjusting the length of the rod, that is, an end portion of the rod is in threaded connection with the main body of the rod, and then the end portion of the rod is rotated to be away from or close to the main body of the rod, thereby adjusting the length of the whole rod to adapt to the dimensions of the to-be-installed location. It may take great effort since the existing adjustment is achieved by artificially rotating the end portion of the rod. In particular, when the rod is installed at a higher place, a person needs to support the rod for a long time, which is time-wasting and labor-consuming, and inconvenient to mount and adjust.

US 2018/0252029A1 discloses an electric mounting unit for a curtain rod according to the preamble of claim 1. In particular, it discloses a headrail for window coverings that may include an extensible end cap and a gearbox which automatically adjusts the headrail mounting. The extensible end cap may include a mounting bracket which may be connected to a piston. The piston may be connected to a floating bearing. The gearbox may include a motor-driven main gear which rotates a threaded rod. As the threaded rod rotates, an end of the threaded rod may move toward a floating bearing. The floating bearing may apply force the piston which may transmit the force to the mounting bracket. The extensible end cap may also include a sensor which detects the amount of pressure or force applied to the mounting bracket. When the sensor collects a measurement below a defined level, the motor may actuate the main gear to rotate the threaded rod and apply additional force to the mounting bracket.

CN106859258A relates to the field of smart furniture, in particular to an automatically installed smart curtain. The curtain comprises an electric regulating module, a support module, walking modules, an electric control module, a connection module, a curtain module and a remote control module. The electric regulating module is located at the center of the support module. The walking modules are installed at the two ends of the support module. The electric control module is connected with the support module. The connection module is installed on the walking modules. The curtain module is connected with the walking modules. Signal transmission is available between the remote control module and the electric control module. The automatically installed smart curtain is mainly applicable to the curtain installation work on windows with vertical walls located at both sides. The function of the remote control module can achieve the automatic installation of curtain, and brings convenience to the replacement or cleaning of curtain the latter period of use. Ath the same time, the reverse locking feature of a worm and gear is used for completing the lasting locating fucntion of the curtain with ease and strong stability.

### Summary

One objective of the present disclosure is to overcome the shortcomings of the prior arts by providing a punching-free electric mounting unit which is convenient to mount and adjust.

The technical solution of the present invention provides a punching-free electric mounting unit according to claim 1, comprising a housing, and a motor is arranged within the housing. The output end of the motor is provided with a decelerating mechanism, a connecting block and a pushing block in turn according to the claims. The pushing block is capable of moving relative to the connecting block. The output speed of the motor is decelerated by the decelerating mechanism and then transferred to the connecting block to drive the connecting block to act, and then the connecting block drives the pushing block to move. The fine tuning of the length of the curtain rod is realized through outward movement of the pushing block, so the length of the curtain rod fits with the dimensions of the to-be-installed location, and it is stable to mount. With the abovementioned structure, the motor of the punching-free electric mounting unit outputs a driving force, and then the decelerating mechanism connected at the output end of the motor outputs the speed of an output shaft of the motor to the connecting block at a low rate, such that the movement speed of the connecting block when driven is ensured to be proper, and the movement speed of the pushing block is further ensured to be proper, thus satisfying the fine tuning requirements in installation of the curtain rod, making adjustment precision higher, and preventing damage caused by the pushing block colliding on the lateral wall of the to-be-installed location at a higher rate after driven by the motor that runs excessively fast.

Further, the decelerating mechanism comprises a set of first-stage gears and a set of second-stage gears, with the axes of the two sets of gears parallel to each other. The first-stage gears and the second-stage gears are mutually meshed. The decelerating mechanism also comprises a first-stage shaft of which one end is connected with the output end of the motor and the first-stage shaft is also connected with a first-stage gear closest to the motor. The set of first-stage gears at least comprises two gears different in diameter, the gear with a bigger diameter and the gear with a smaller diameter are spaced apart and coaxially arranged, and the first-stage gear closest to the motor is the gear with a smaller diameter. The set of second-stage gears at least comprises two gears different in diameter, the gear with a bigger diameter and the gear with a smaller diameter are spaced apart and coaxially arranged, and the second-stage gear closest to the motor is the gear with a bigger diameter.

The first-stage gear furthest away from the motor is connected with a drive output shaft. According to the invention, the decelerating mechanism also comprises a second-stage gear I parallel to the first-stage gear. The second-stage gear I is connected to the second-stage gear closest to the motor. The second-stage gear furthest away from the motor is connected with a second-stage gear II. Further, the connecting block and the pushing block may be in threaded connection.

According to the invention, the motor may comprise a control unit, and a button is provided on the control circuit board of the control unit for turning on/off the motor.

According to the invention, the housing may comprise a first connecting box and a second connecting box that can spliced together. The lateral wall of the first connecting box is provided with a through hole in which the button of the control unit is mounted. The motor and the decelerating mechanism can be accommodated in the second connecting box.

According to the invention, the first connecting box may comprise at least two accommodating cavities respectively for accommodating the control circuit board of the motor as well as the connecting block and the pushing block. One surface of the first connecting box facing to the decelerating mechanism is provided with a through hole through which the output shaft of the decelerating mechanism penetrates to be connected with the connecting block.

Further, the set of first-stage gears may comprise six gears that are spaced apart in a small-large-small-large order based on the diameter size along the direction gradually away from the motor. That is to say, the six gears are successively arranged as follows: first-stage small gear One, first-stage large gear One, first-stage small gear Two, first-stage large gear Two, first-stage small gear Three, and first-stage large gear Three. The first-stage large gear One and the first-stage small gear Two form a first-stage duplex gear One, and the first-stage large gear Two and the first-stage small gear Three form a first-stage duplex gear Two. The set of second-stage gears comprise six gears that are spaced apart in a large-small-large-small order based on the diameter size along the direction gradually away from the motor. That is to say, the six gears are successively arranged as follows: second-stage large gear One, second-stage small gear One, second-stage large gear Two, second-stage small gear Two, second-stage large gear Three, and second-stage small gear Three. The second-stage large gear One and the second-stage small gear One form a second-stage duplex gear One, the second-stage large gear Two and the second-stage small gear Two form a second-stage duplex gear Two, and the second-stage large gear Three and the second-stage small gear Three form a second-stage duplex gear Three. The first-stage gears and the second-stage gears are respectively meshed according to the above arrangement sequence.

Further, one surface of the pushing block facing to the lateral wall where the curtain rod is to be installed may be a coarse surface.

The other object of the present invention is to provide a curtain rod with the punching-free electric mounting unit. The punching-free electric mounting unit is at least mounted on one end of the curtain rod.

### Brief Description of the Drawings

Fig. 1 shows a curtain rod with a punching-free electric mounting unit of the present invention.
Fig. 2 is a schematically structural diagram of the punching-free electric mounting unit of the present invention.
Fig. 3 is a schematic diagram showing assembly of the punching-free electric mounting unit of the present invention.
Fig. 4 is a schematically structural diagram of the first connecting box of Fig. 3.
Fig. 5 is a schematically structural diagram of the first connecting box of Fig. 3, viewed from another angle.
Fig. 6 is a schematically structural diagram of the decelerating mechanism of Fig. 3.

### Embodiments

The present invention will be further explained by referring to the particular embodiments.

In the description of the invention, it should be understood that, all directional or positional relationships indicated by the terms including "center", "longitudinal direction", "transverse direction", "length", "width", "thickness", "upper", "lower", "front", "back", "left", "right", "vertical", "horizontal", "top", "bottom", "inside", "outside", "clockwise", "anticlockwise", "axial direction", "radial direction", "circumferential direction" and the like are merely for the purpose of conveniently and simply describing the present invention, instead of indicating or hinting the device or component referred to must have the particular orientation or be structured and operated at the particular orientation, and thus cannot be read to limitations to the present invention.

Besides, the terms "first" and "second" are merely for descriptive purpose, and thus cannot be understood as indicating or hinting relative importance or implying the quantity of the mentioned technical features. Therefore, the features defined by the terms "first" or "second" may explicitly or implicitly comprise at least one such feature. In the description of the present invention, the wording "a plurality of means at least two, e.g., two, three or the like unless otherwise clearly defined.

In the present invention, unless otherwise clearly stipulated, the terms "mount", "link", "connect", "fix" and the like should be understood in a broad sense, e.g., fixed connection, detachable connection or integral connection; or mechanical connection, or electrical connection; or direct connection, or indirect connection via a medium. It may further refer to interior communication or interaction of two components unless otherwise explicitly defined. For those of ordinary skill in the art, its particular meanings can be understood depending on the particular contexts.

In the present invention, unless otherwise clearly stipulated, the expression that a first feature is "above" or "below" a second feature may mean that the first and second features are in direct contact, or in indirect contact via a medium. Moreover, the expression that the first feature is "over", "above" or on the "top" of the second feature may mean that the first feature is over or above the second feature, or the first feature is merely higher than the second feature in the horizontal height. The expression that the first feature is "under", "below" or on the "bottom" of the second feature may mean that the first feature is under or below the second feature, or the first feature is merely shorter than the second feature in the horizontal height.

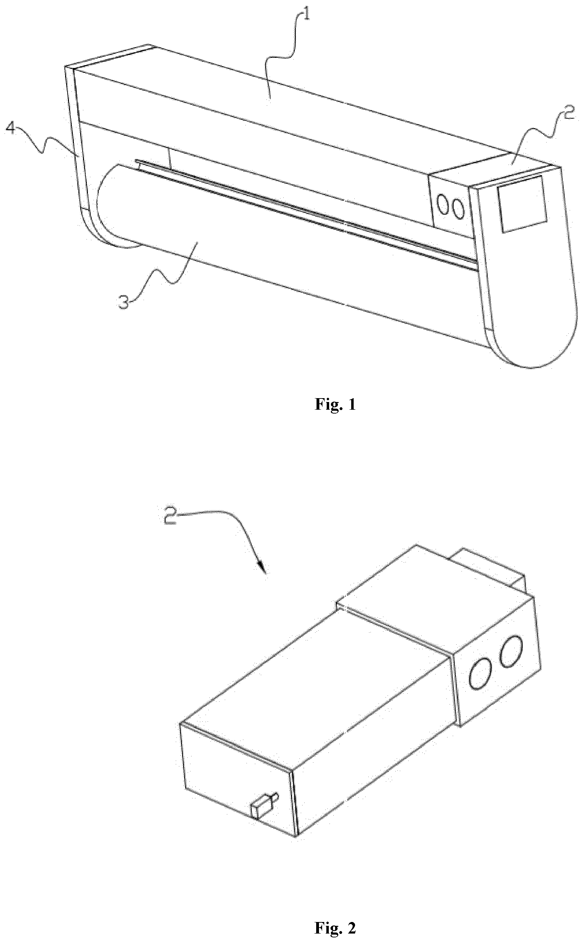

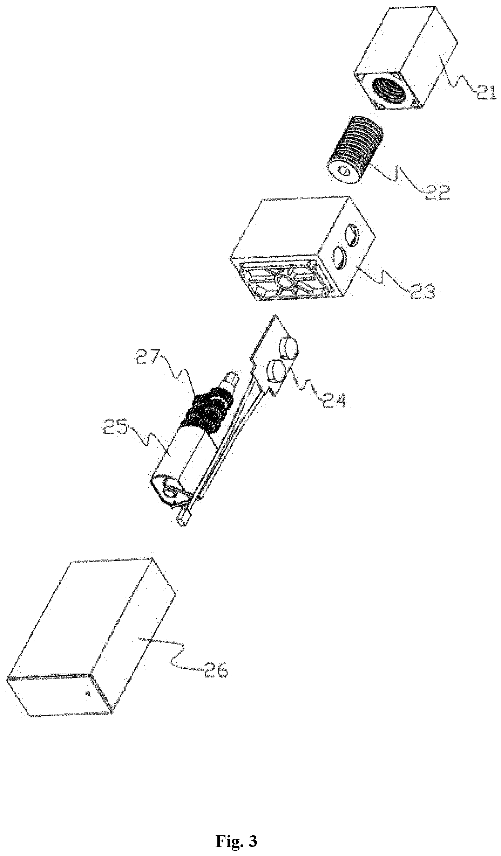

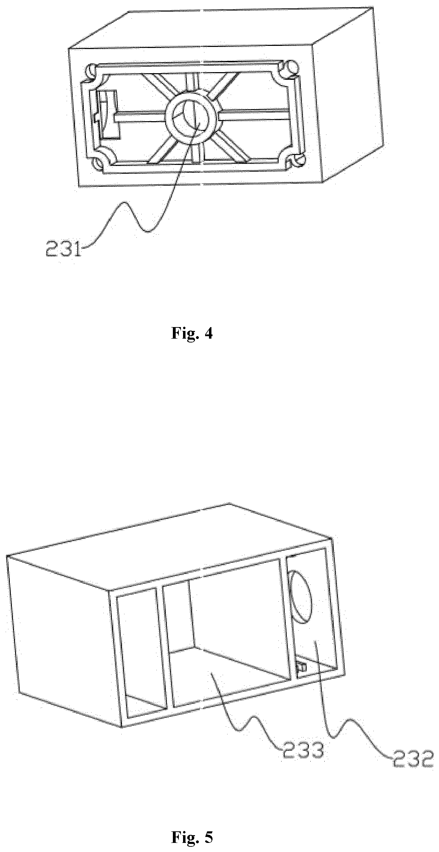

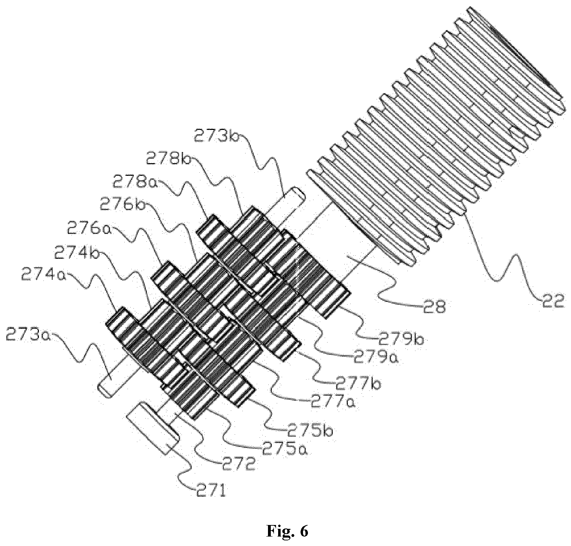

The present invention provides a punching-free electric mounting unit. Fig. 2 is a schematically structural diagram of the mounting unit. Fig. 3 is a schematic diagram showing assembly of the mounting unit. Fig. 4 is a schematically structural diagram of a first connecting box. Fig. 5 is a schematically structural diagram of the first connecting box, viewed from another angle. Fig. 6 is a schematically structural diagram of a decelerating mechanism. Fig. 1 shows a curtain rod with the punching-free electric mounting unit.

The present invention provides a punching-free electric mounting unit. As shown in Figs. 2 and 3, it comprises a housing in which a motor 25 is mounted. The output end of the motor 25 is provided with a decelerating mechanism 27, a connecting block 22 and a pushing block 21 in turn. The motor 25 outputs a driving force to drive the connecting block 22, and then the connecting block 22 drives the pushing block 21 to move. The fine tuning of the length of the curtain rod is realized through outward movement of the pushing block 21, so the curtain rod can be stably mounted.

When the punching-free electric mounting unit of the present invention is used, the motor 25 is started to output a driving force, the decelerating mechanism 27 connected at the output end of the motor 25 outputs the speed of an output shaft of the motor to the connecting block 22 at a low rate, so that the movement speed of the connecting block 22 when driven is ensured to be proper, and the movement speed of the pushing block 21 is further ensured to be proper, thereby satisfying the fine tuning requirements in installation of the curtain rod, making adjustment precision higher, and preventing damage caused by the pushing block 21 colliding on the lateral wall of the to-be-installed location at a high rate after driven by the motor 25 that runs excessively fast.

As a further improved embodiment, as shown in Fig. 3, the connecting block 22 and the pushing block 21 are in threaded connection. In particular, the connecting block 22 is cylinder-shaped and has external threads, the pushing block 21 has internal threads matched with the external threads, or the external threads and the internal threads are placed in reverse. That is to say, the connecting block 22 has a connecting cavity of which the wall is provided with the external threads, the pushing block 21 is provided with the internal threads matched with the external threads (the reverse thread arrangement is not shown in the figure). The action process is that the connecting block 22 is driven by the driving force of the motor 25 to rotate, and then drives the pushing block 21 to rotate under the effect of threaded connection, so that the whole lengths of the connecting block 22 and the pushing block 21 change so as to achieve length adjustment.

As a further improved embodiment, as shown in Fig. 3, the motor 25 comprises a control unit, an electricity access unit and so on. The control circuit board 24 of the control unit is provided with a button for closing or opening the motor 25.

As a further improved embodiment, as shown in Fig. 3, the housing comprises a first connecting box 23 and a second connecting box 26 mutually coverable to each other. The lateral wall of the first connecting box 23 is provided with a through hole in which the button of the control unit is arranged. The motor 25 and the decelerating mechanism 27 can be contained in the second connecting box 26.

As a further improved embodiment, as shown in Figs.3 to 5, the first connecting box 23 has at least two accommodating cavities 232, 233 respectively for accommodating the control circuit board 24 as well as the connecting block 22 and the pushing block 21. One surface of the first connecting box 23 facing to the decelerating mechanism 27 is provided with a through hole 231 through which the output shaft of the decelerating mechanism 27 penetrates to be connected with the connecting block 22. In an improved embodiment, the control circuit board 24 is contained in the accommodating cavity 232, the connecting block 22 and the pushing block 21 are contained in the accommodating cavity 233, but the accommodating cavity 232 and the accommodating cavity 233 are integrated on the first connecting box 23. Therefore, a control unit and a drive unit are separated so as to not only prevent mutual interference but also ensure integrity of the mounting unit.

As a further improved embodiment, as shown in Fig. 6, the decelerating mechanism 27 comprises a set of first-stage gears and a set of second-stage gears, with the axes (extending along the length direction of the curtain rod) of the two sets of gears parallel to each other. The first-stage gears and the second-stage gears are mutually meshed. The decelerating mechanism 27 also comprises a first-stage shaft 272 of which one end is connected with the output end 271 of the motor and the other end is connected with the first-stage gear closest to the motor 25. The set of first-stage gears at least comprises two gears different in diameter, the gear with a bigger diameter and the gear with a smaller diameter are spaced apart and coaxially arranged, and the gear closest to the motor 25 is the gear with a smaller diameter. The set of second-stage gears at least comprises two gears different in diameter, the gear with a bigger diameter and the gear with a smaller diameter are spaced apart and coaxially arranged, and the gear closest to the motor 25 is the gear with a bigger diameter. The first-stage gear furthest away from the motor 25 is connected with a drive output shaft 28. The driving force output by the motor 25 is transferred to the first-stage shaft 272 through the output end 271 of the motor, the first-stage shaft 272 drives the first-stage gear connected therewith to rotate, the first-stage gear drives a second-stage gear to rotate, and the second-stage gear drives the first-stage gear in turn. Therefore, by virtue of match of gear diameter and gear ratio, when the rotation speed output by the motor is transferred to the drive output shaft 28, output rate is lowered.

As a further improved embodiment, as shown in Fig. 6, the decelerating mechanism 27 also comprises a second-stage shaft 273a parallel to the first-stage shaft The second-stage shaft 273a is connected to the second-stage gear closest to the motor 25. The second-stage gear furthest away from the motor 25 is connected with a second-stage shaft 273b. The second-stage shaft 273a and the second-stage shaft 273b are mounted on the lateral wall of the housing, so operation stability of the second-stage gears is improved.

As a further improved embodiment, as shown in Fig. 6, the set of first-stage gears comprise six gears that are spaced apart in a small-large-small-large-small-big order based on the diameter size along the direction gradually away from the motor 25. That is to say, the six gears are successively arranged as follows: first-stage small gear One 275a, first-stage large gear One 275b, first-stage small gear Two 277a, first-stage large gear Two 277b, first-stage small gear Three 279a, first-stage large gear Three 279b. The first-stage large gear One 275b and the first-stage small gear Two 277a form a first-stage duplex gear One, and the first-stage large gear Two 277b and the first-stage small gear Three 279a form a first-stage duplex gear Two. The set of second-stage gears comprise six gears that are spaced apart in a big-small-large-small-large-small order based on the diameter size along the direction gradually away from the motor 25. That is, the six gears are successively arranged as follows: second-stage large gear One 274a, second-stage small gear One 274b, second-stage large gear Two 276a, second-stage small gear Two 276b, second-stage large gear Three 278a, and second-stage small gear Three 278b. The second-stage large gear One 274a and the second-stage small gear One 274b form a second-stage duplex gear One, the second-stage large gear Two 276a and the second-stage small gear Two 276b form a second-stage duplex gear Two, and the second-stage large gear Three 278a and the second-stage small gear Three 278b form a second-stage duplex gear Three. The first-stage gears and the second-stage gears are respectively meshed according to the above arrangement sequence, i.e., the first-stage small gear One 275a and the second-stage large gear One 274a are meshed, the first-stage large gear One 275b and the second-stage small gear One 274b are meshed...... and so on. In use, the driving force output by the motor 25 is transferred to the first-stage shaft 272 through the output end 271 of the motor, the first-stage shaft 272 drives the first-stage small gear One 275a to rotate, the first-stage small gear One 275a drives the second-stage large gear One 274a and the second-stage small gear One 274b (i.e., the second-stage duplex gear One) to rotate through meshing with the second-stage large gear One 274a; the second-stage small gear One 274b drives the first-stage large gear One 275b and the first-stage small gear Two 277a (i.e., the first-stage duplex gear One) to rotate through meshing with the first-stage large gear One 275b, in accordance with the sequence, the first-stage duplex gear One drives the second-stage duplex gear Two to rotate, then the second-stage duplex gear Two drives the first-stage duplex gear Two to rotate, the next-stage duplex gear Two drives the second-stage duplex gear Three to rotate, and finally the second-stage duplex gear Three drives the first-stage large gear Three 279b. Therefore, the driving force of the motor is output to the connecting block 22 through the drive output shaft 28 connected with the first-stage large gear Three 279b. In this process, after multi-stage deceleration, rotation speed output by the motor 25 is lowered, so that rotation speed of the connecting block 22 is steady and controllable.

As a further improved embodiment, one surface of the pushing block 21 facing to the lateral wall on which the curtain rod is to be installed is a coarse surface, for increasing a friction force with the lateral wall of the to-be-installed location, improving mounting fastness.

The present invention also provides a curtain cord with the punching-free electric mounting unit. The punching-free electric mounting unit is at least mounted on one end of the curtain rod. As shown in Fig. 1, one end of the main body 1 of the curtain rod is provided with the punching-free electric mounting unit 2, and the lateral surface on which the main body 1 of the curtain rod and a connector 4 of a reel 3 are connected is provided with a through hole for protrusion of the pushing block 21 of the punching-free electric mounting unit, so length of the curtain rod is adjusted.

The curtain rod with the punching-free electric mounting unit of the present invention is convenient to use. After the curtain rod is placed on the to-be-installed location, if its length needs to be adjusted, the motor 25 is started, the pushing block 21 is protruded under the effect of the driving force of the motor 25, and the motor is closed once the desired length is reached, by this time, the curtain rod can be steadily mounted.

Otherwise particularly stated, materials, reagents and experimental equipment involved in the embodiments of the present invention belong to commercially available products of rod parts. The described above is merely the preferred embodiments of the present invention. It should be pointed out that, for persons having ordinary skill in the art, any improvements and modifications made without departing from the core technology of the present invention are appreciated. These improvements and modifications shall fall into the scope of the appended claims.

## Claims

1. A punching-free electric mounting unit configured to be mounted on one end of a curtain rod and configured to mount said curtain rod between two lateral walls, wherein said punching-free electric mounting unit comprises a housing (23, 26), and a motor (25) is arranged within the housing; the output end of the motor is provided with a decelerating mechanism (27), a connecting block (22) and a pushing block (21) in sequence; the pushing block (21) can move relative to the connecting block (22); the output speed of the motor (25) is decelerated by the decelerating mechanism (27) and then transferred to the connecting block (22) to drive the connecting block (22) to act, and then the connecting block (22) drives the pushing block (21) to move outward so the curtain rod can be stably mounted, wherein the decelerating mechanism (27) comprises a set of first-stage gears and a set of second-stage gears, with the axes of the two sets of gears parallel to each other; the first-stage gears and the second-stage gears are mutually meshed; the decelerating mechanism (27) also comprises a first-stage shaft (272) of which one end is connected with the output end (271) of the motor (25) and the other end is connected with a first-stage gear (275a) closest to the motor (25); the set of first-stage gears at least comprises two gears different in diameter, the gear with a bigger diameter and the gear with a smaller diameter are spaced apart and coaxially arranged, and the first-stage gear closest to the motor (25) is the gear with a smaller diameter; the set of second-stage gears at least comprises two gears different in diameter, the gear with a bigger diameter and the gear with a smaller diameter are spaced apart and coaxially arranged, and a second-stage gear (274a) closest to the motor (25) is the gear with a bigger diameter; the first-stage gear furthest away from the motor (25) is connected with a drive output shaft (28), wherein the motor comprises a control unit, and a button is provided on a control circuit board (24) of the control unit for turning on/off the motor (25);
the housing comprises a first connecting box (23) and a second connecting box (26) that can spliced together; the lateral wall of the first connecting box (23) is provided with a through hole in which the button of the control unit is mounted, and the motor (25) and the decelerating mechanism (27) can be accommodated in the second connecting box (26);
the first connecting box (23) comprises at least two accommodating cavities (232, 233) respectively for accommodating the control circuit board (24) of the motor (25), the connecting block (22) and the pushing block (21); one surface of the first connecting box (23) facing to the decelerating mechanism (27) is provided with a through hole (231) through which the drive output shaft of the decelerating mechanism (27) penetrates to be connected with the connecting block (22);
the decelerating mechanism (27) further comprises a second-stage shaft (273a) parallel to the first-stage shaft (272); the second-stage shaft (273a) is connected to the second-stage gear closest to the motor (25).

2. The punching-free electric mounting unit of claim 1, wherein the connecting block (22) and the pushing block (21) are in threaded connection.

3. The punching-free electric mounting unit of claim 1, wherein the set of first-stage gears comprise six gears that are spaced apart in a small-large-small-large order based on the diameter size along the direction gradually away from the motor (25), which are successively arranged as: first-stage small gear One (275a) which is the first-stage gear (275a) closest to the motor(25), first-stage large gear One (275b), first-stage small gear Two (277a), first-stage large gear Two (277b), first-stage small gear Three (279a), and first-stage large gear Three (279b); the first-stage large gear One (275b) and the first-stage small gear Two (277a) form a first-stage duplex gear One, and the first-stage large gear Two (277b) and the first-stage small gear Three (279a) form a first-stage duplex gear Two; the set of second-stage gears comprise six gears that are spaced apart in a large-small-large-small order based on the diameter size along the direction gradually away from the motor (25).

4. The punching-free electric mounting unit of any of the claims 1 to 3, wherein one surface of the pushing block (21) facing to the lateral wall where the curtain rod is to be installed is a coarse surface.

5. A curtain rod with the punching-free electric mounting unit of any of the claims 1 to 3, wherein the punching-free electric mounting unit is at least mounted on one end of the curtain rod.

## Patentansprüche

1. - Stanzfreie elektrische Halterungseinheit, die konfiguriert ist, um an einem Ende einer Vorhangstange montiert zu werden und konfiguriert ist, um die Vorhangstange zwischen zwei Seitenwänden zu montieren, wobei die stanzfreie elektrische Halterungseinheit ein Gehäuse (23, 26) umfasst und ein Motor (25) innerhalb des Gehäuses angeordnet ist; das Ausgangsende des Motors nacheinander mit einem Verzögerungsmechanismus (27), einem Verbindungsblock (22) und einem Schiebeblock (21) versehen ist; sich der Schiebeblock (21) in Bezug auf den Verbindungsblock (22) bewegen kann;
die Ausgangsdrehzahl des Motors (25) durch den Verzögerungsmechanismus (27) verlangsamt und dann auf den Verbindungsblock (22) übertragen wird, um den Verbindungsblock (22) zum Wirken zu bringen, und dann der Verbindungsblock (22) den Schiebeblock (21) antreibt, um sich nach außen zu bewegen, sodass die Vorhangstange stabil montiert werden kann,
wobei der Verzögerungsmechanismus (27) einen Satz von Erststufen-Zahnrädern und einen Satz von Zweitstufen-Zahnrädern umfasst, wobei die Achsen der zwei Sätze von Zahnrädern parallel zueinander sind; die Erststufen-Zahnräder und die Zweitstufen-Zahnräder gegenseitig kämmen; der Verzögerungsmechanismus (27) auch eine Erststufen-Welle (272) umfasst, deren eines Ende mit dem Ausgangsende (271) des Motors (25) verbunden ist und deren anderes Ende mit einem Erststufen-Zahnrad (275a) verbunden ist, das dem Motor (25) am nächsten ist; der Satz von Erststufen-Zahnrädern mindestens zwei Zahnräder mit unterschiedlichem Durchmesser umfasst, wobei das Zahnrad mit einem größeren Durchmesser und das Zahnrad mit einem kleineren Durchmesser voneinander beabstandet und koaxial angeordnet sind, und das Erststufen-Zahnrad, das dem Motor (25) am nächsten ist, das Zahnrad mit einem kleineren Durchmesser ist; der Satz von Zweitstufen-Zahnrädern mindestens zwei Zahnräder mit unterschiedlichem Durchmesser umfasst, wobei das Zahnrad mit einem größeren Durchmesser und das Zahnrad mit einem kleineren Durchmesser voneinander beabstandet und koaxial angeordnet sind, und ein Zweitstufen-Zahnrad (274a), das dem Motor (25) am nächsten ist, das Zahnrad mit einem größeren Durchmesser ist; das am weitesten von dem Motor (25) entfernte Erststufen-Zahnrad mit einer Antriebsausgangswelle (28) verbunden ist,
wobei der Motor eine Steuereinheit umfasst und eine Taste an einer Steuerplatine (24) der Steuereinheit zum Ein- und Ausschalten des Motors (25) bereitgestellt ist;
das Gehäuse einen ersten Verbindungskasten (23) und einen zweiten Verbindungskasten (26) umfasst, die miteinander verbunden werden können; die Seitenwand des ersten Verbindungskastens (23) mit einem Durchgangsloch versehen ist, in dem der Knopf der Steuereinheit montiert ist, und der Motor (25) und der Verzögerungsmechanismus (27) in dem zweiten Verbindungskasten (26) untergebracht werden können; der erste Verbindungskasten (23) mindestens zwei Unterbringungshohlräume (232, 233) jeweils zum Unterbringen der Steuerplatine (24) des Motors (25), des Anschlussblocks (22) und des Schiebeblocks (21) umfasst; eine Oberfläche des ersten Verbindungskasten (23), die dem Verzögerungsmechanismus (27) zugewandt ist, mit einem Durchgangsloch (231) versehen ist, durch das die Antriebsausgangswelle des Verzögerungsmechanismus (27) verläuft, um mit dem Verbindungsblock (22) verbunden zu werden;
der Verzögerungsmechanismus (27) ferner eine Zweitstufen-Welle (273a) parallel zu der Erststufen-Welle (272) umfasst;
die Zweitstufen-Welle (273a) mit dem Zweitstufen-Zahnrad verbunden ist, das dem Motor (25) am nächsten ist.

2. - Stanzfreie elektrische Halterungseinheit nach Anspruch 1, wobei der Verbindungsblock (22) und der Schiebeblock (21) in Schraubverbindung sind.

3. - Stanzfreie elektrische Halterungseinheit nach Anspruch 1, wobei der Satz von Erststufen-Zahnrädern sechs Zahnräder umfasst, die in einer Reihenfolge klein-großklein-groß basierend auf der Durchmessergröße entlang der Richtung allmählich weg von dem Motor (25) beabstandet sind, die nacheinander wie folgt angeordnet sind:
kleines Erststufen-Zahnrad Eins (275a), das das Erststufen-Zahnrad (275a) ist, das dem Motor (25) am nächsten ist, großes Erststufen-Zahnrad Eins (275b), kleines Erststufen-Zahnrad Zwei (277a), großes Erststufen-Zahnrad Zwei (277b), kleines Erststufen-Zahnrad Drei (279a) und großes Erststufen-Zahnrad Drei (279b); wobei das große Erststufen-Zahnrad Eins (275b) und das kleine Erststufen-Zahnrad Zwei (277a) ein Erststufen-Duplexzahnrad Eins bilden, und das große Erststufen-Zahnrad Zwei (277b) und das kleine Erststufen-Zahnrad Drei (279a) ein Erststufen-Duplexzahnrad Zwei bilden; der Satz von Zweitstufen-Zahnrädern sechs Zahnräder umfasst, die in einer Reihenfolge groß-kleingroß-klein basierend auf der Durchmessergröße entlang der Richtung allmählich weg von dem Motor (25) beabstandet sind.

4. - Stanzfreie elektrische Halterungseinheit nach einem der Ansprüche 1 bis 3, wobei eine Oberfläche des Schiebeblocks (21), die der Seitenwand zugewandt ist, an der die Vorhangstange installiert werden soll, eine raue Oberfläche ist.

5. - Vorhangstange mit der stanzfreien elektrischen Halterungseinheit nach einem der Ansprüche 1 bis 3, wobei die stanzfreie elektrische Halterungseinheit zumindest an einem Ende der Vorhangstange montiert ist.

## Revendications

1. - Unité de montage électrique sans poinçonnage configurée pour être montée sur une extrémité d'une tringle à rideau et configurée pour monter ladite tringle à rideau entre deux murs latéraux, dans laquelle ladite unité de montage électrique sans poinçonnage comprend un boîtier (23, 26), et un moteur (25) est disposé à l'intérieur du boîtier ; l'extrémité de sortie du moteur comporte un mécanisme de décélération (27), un bloc de connexion (22) et un bloc de poussée (21) dans l'ordre ; le bloc de poussée (21) peut se déplacer par rapport au bloc de connexion (22) ; la vitesse de sortie du moteur (25) est décélérée par le mécanisme de décélération (27) puis transférée au bloc de connexion (22) pour entraîner le bloc de connexion (22) à agir, puis le bloc de connexion (22) entraîne le bloc de poussée (21) à se déplacer vers l'extérieur de telle sorte que la tringle à rideau peut être montée de manière stable,
dans laquelle le mécanisme de décélération (27) comprend un ensemble d'engrenages du premier étage et un ensemble d'engrenages de second étage, les axes des deux ensembles d'engrenages étant parallèles entre eux ; les engrenages de premier étage et les engrenages de second étage s'engrènent mutuellement ; le mécanisme de décélération (27) comprend également un arbre de premier étage (272) dont une extrémité est reliée à l'extrémité de sortie (271) du moteur (25) et l'autre extrémité est reliée à un engrenage de premier étage (275a) le plus proche du moteur (25) ; l'ensemble d'engrenages de premier étage comprend au moins deux engrenages de diamètres différents, l'engrenage de plus grand diamètre et l'engrenage de plus petit diamètre sont espacés et disposés coaxialement, et l'engrenage de premier étage le plus proche du moteur (25) est l'engrenage de plus petit diamètre ; l'ensemble d'engrenages de second étage comprend au moins deux engrenages de diamètres différents, l'engrenage de plus grand diamètre et l'engrenage de plus petit diamètre sont espacés et disposés coaxialement, et un engrenage de second étage (274a) le plus proche du moteur (25) est l'engrenage de plus grand diamètre ; l'engrenage de premier étage le plus éloigné du moteur (25) est relié à un arbre de sortie d'entraînement (28),
dans laquelle le moteur comprend une unité de commande, et un bouton est disposé sur une carte de circuit imprimé de l'unité de commande (24) pour mettre en marche/arrêter le moteur (25) ;
le boîtier comprend une première boîte de connexion (23) et une seconde boîte de connexion (26) qui peuvent être assemblées ; la paroi latérale de la première boîte de connexion (23) comporte un trou traversant dans lequel le bouton de l'unité de commande est monté, et le moteur (25) et le mécanisme de décélération (27) peuvent être reçus dans la seconde boîte de connexion (26) ;
la première boîte de connexion (23) comprend au moins deux cavités de réception (232, 233) destinées à recevoir respectivement la carte de circuit imprimé de commande (24) du moteur (25), le bloc de connexion (22) et le bloc de poussée (21) ; une surface de la première boîte de connexion (23) orientée vers le mécanisme de décélération (27) comporte un trou traversant (231) à travers lequel l'arbre de sortie d'entraînement du mécanisme de décélération (27) pénètre pour être relié au bloc de connexion (22) ;
le mécanisme de décélération (27) comprend en outre un arbre de second étage (273a) parallèle à l'arbre de premier étage (272) ; l'arbre de second étage (273a) est relié à l'engrenage de second étage le plus proche du moteur (25).

2. - Unité de montage électrique sans poinçonnage selon la revendication 1, dans laquelle le bloc de connexion (22) et le bloc de poussée (21) sont raccordés par vissage.

3. - Unité de montage électrique sans poinçonnage selon la revendication 1, dans laquelle l'ensemble d'engrenages du premier étage comprend six engrenages qui sont espacés dans un ordre petit-grand-petit-grand basé sur la dimension de diamètre le long de la direction s'éloignant progressivement du moteur (25), qui sont successivement disposés comme suit : petit engrenage de premier étage Un (275a) qui est l'engrenage de premier étage (275a) le plus proche du moteur (25), grand engrenage de premier étage Un (275b), petit engrenage de premier étage Deux (277a), grand engrenage de premier étage Deux (277b), petit engrenage de premier étage Trois (279a) et grand engrenage de premier étage Trois (279b) ; le grand engrenage de premier étage Un (275b) et le petit engrenage de premier étage Deux (277b) forment un engrenage duplex de premier étage Un, et le grand engrenage de premier étage Deux (277b) et le petit engrenage de premier étage Trois (279a) forment un engrenage duplex de premier étage Deux ; l'ensemble d'engrenages de second étage comprend six engrenages qui sont espacés dans un ordre grand-petit-grand-petit sur la base de la dimension de diamètre le long de la direction qui s'éloigne progressivement du moteur (25).

4. - Unité de montage électrique sans poinçonnage selon l'une quelconque des revendications 1 à 3, dans laquelle une surface du bloc de poussée (21) orientée vers le mur latéral où la tringle à rideau doit être installée est une surface grossière.

5. - Tringle à rideau avec l'unité de montage électrique sans poinçonnage selon l'une quelconque des revendications 1 à 3, dans laquelle l'unité de montage électrique sans poinçonnage est au moins montée sur une extrémité de la tringle à rideau.
